(19) Europäisches Patentamt
European Patent Office
Office européen des brevets

(11) **EP 3 142 044 A1**

(12) **EUROPEAN PATENT APPLICATION**

(43) Date of publication:
**15.03.2017 Bulletin 2017/11**

(51) Int Cl.:
***G06K 9/00*** *(2006.01)*

(21) Application number: **16186097.8**

(22) Date of filing: **29.08.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **10.09.2015 JP 2015178137**

(71) Applicant: **FUJITSU LIMITED**
**211-8588 Kanagawa (JP)**

(72) Inventor: **Abe, Narishige**
**Kanagawa, 211-8588 (JP)**

(74) Representative: **Hoffmann Eitle**
**Patent- und Rechtsanwälte PartmbB**
**Arabellastraße 30**
**81925 München (DE)**

(54) **BIOMETRIC AUTHENTICATION DEVICE AND BIOMETRIC AUTHENTICATION METHOD**

(57) An image reading unit (111) reads an image of a pattern of a living body. A feature point extraction unit (112) extracts a plurality of feature points from the pattern and a feature amount calculation unit (113) calculates a feature amount of each combination of the feature points. A classification unit (114) classifies the combination according to the feature amount and a selection unit (115) selects registered feature point information to be compared with the feature points included in the combination in accordance with classification.

FIG. 1

**Description**

FIELD

The embodiments discussed herein are related to a biometric authentication device and a biometric authentication method.

BACKGROUND

In recent years, biometric authentication has been used in a wide range of fields from a large-scale authentication infrastructure such as the management of entering into/leaving from a building or a room, border controls at a border, or a national unique ID for uniquely identifying the nation to terminals for personal use such as cellular phones or personal computers (PCs).

In a biometric authentication system in a large-scale authentication infrastructure, a wide-area fingerprint sensor that can collect much fingerprint information at one time is used in many cases. In terminals for personal use such as cellular phones or PCs, a small-size inexpensive sweep-type fingerprint sensor is used in many cases.

In recent years, a further increase in precision of a biometric authentication technology and the speeding-up of the biometric authentication technology, and a template protection technology based on cryptographic theory have been actively researched and developed. As a base for the research and development above, a vectorization technology based on feature points extracted from a fingerprint image has been attracting attention. In the vectorization technology, a one-dimensional vector is generated by devising extraction of features from a fingerprint image, and a distance (L1 norm, L2 norm, or the like) between vectors is used as a score in matching. Many types of the vectorization technology have been proposed (see, for example, Patent Document 1).

A method for classifying fingerprint images according to the spatial frequency components of the fingerprint images is also known (see, for example, Patent Document 2). Further, a matching device is known that reconstructs an image from a frequency spectrum of an image including a striped pattern on the basis of a frequency component having an absolute value of amplitude that is greater than or equal to a prescribed threshold when the frequency component satisfies a prescribed condition (see, for example, Patent Document 3).

A fingerprint identification method based on an index of a pair of feature points in a fingerprint is also known (see, for example, Patent Document 4). Further, a method for performing remote authentication on a fingerprint via a network is known (see, for example, Patent Document 5). Furthermore, a fingerprint identification method based on a position and an orientation of a minutia is known (see, for example, Non-Patent Document 1).

Patent Document 1: Japanese Laid-open Patent Publication No. 10-177650
Patent Document 2: Japanese National Publication of International Patent Application No. 2001-511569
Patent Document 3: Japanese Laid-open Patent Publication No. 2007-202912
Patent Document 4: Japanese National Publication of International Patent Application No. 2010-526361
Patent Document 5: Japanese National Publication of International Patent Application No. 2004-536384
Non-Patent Document 1: R. Cappelli, M. Ferrara, and D. Maltoni, "Minutia Cylinder-Code: A New Representation and Matching Technique for Fingerprint Recognition", IEEE TRANSACTIONS ON PATTERN ANALYSIS AND MACHINE INTELLIGENCE, VOL. 32, NO. 12, pp. 2128-2141, 2010.

SUMMARY

It is an object in one aspect of the invention to compare biometric information to be authenticated in biometric authentication with registered biometric information in a short time.

According to an aspect of the embodiments, a biometric authentication device includes an image reading unit, a feature point extraction unit, a feature amount calculation unit, a classification unit and a selection unit.

The image reading unit reads an image of a pattern of a living body. The feature point extraction unit extracts a plurality of feature points from the pattern and the feature amount calculation unit calculates a feature amount of each combination of the feature points. The classification unit classifies the combination according to the feature amount and the selection unit selects registered feature point information to be compared with the feature points included in the combination in accordance with classification.

BRIEF DESCRIPTION OF DRAWINGS

FIG. 1 is a functional block diagram illustrating a biometric authentication device.

FIG. 2 is a flowchart illustrating biometric authentication processing.

FIG. 3 is a functional block diagram illustrating a specific example of a biometric authentication device.

FIG. 4 illustrates a user table.

FIG. 5 illustrates a feature amount table.

FIG. 6 illustrates a type table.

FIG. 7 is a flowchart illustrating biometric information registration processing.

FIG. 8 is a flowchart illustrating classification processing.

FIG. 9 is a flowchart illustrating one-to-one biometric authentication processing.

FIG. 10 is a flowchart illustrating matching processing.

FIG. 11 is a flowchart illustrating one-to-N biometric authentication processing.

FIG. 12 is a functional block diagram illustrating a biometric authentication device using a template.

FIG. 13 is a flowchart illustrating biometric information registration processing using a template.

FIG. 14 illustrates an angle between a line segment connecting feature points and a ridge direction.

FIG. 15 illustrates an upper core.

FIG. 16 illustrates a distance between a line segment connecting feature points and an upper core.

FIG. 17 is a block diagram illustrating an information processing device.

DESCRIPTION OF EMBODIMENTS

Embodiments are described below in detail with reference to the drawings.

In a conventional vectorization technology based on feature points, a feature amount obtained by vectorizing information around a feature point is calculated for each of the feature points, and the feature amount is used as registered data or matching data in many cases. By doing this, it is difficult to restore original fingerprint information from the feature amount, and difficulty in restoration can be secured.

However, the vectorized feature amount includes only local information around a feature point, and therefore it is difficult to perform global alignment between matching data and registered data at the time of matching. Consequently, all of the registered feature points are searched for in order to associate respective feature points included in the matching data with respective feature points included in the registered data, and matching time increases.

The problem above occurs not only in biometric authentication based on fingerprint information, but also in biometric authentication based on other biometric information such as an image of a finger vein.

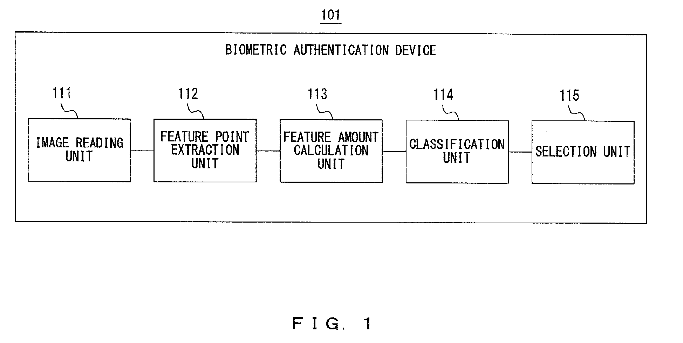

FIG. 1 illustrates an example of a functional configuration of a biometric authentication device. A biometric authentication device 101 illustrated in FIG. 1 includes an image reading unit 111, a feature point extraction unit 112, a feature amount calculation unit 113, a classification unit 114, and a selection unit 115.

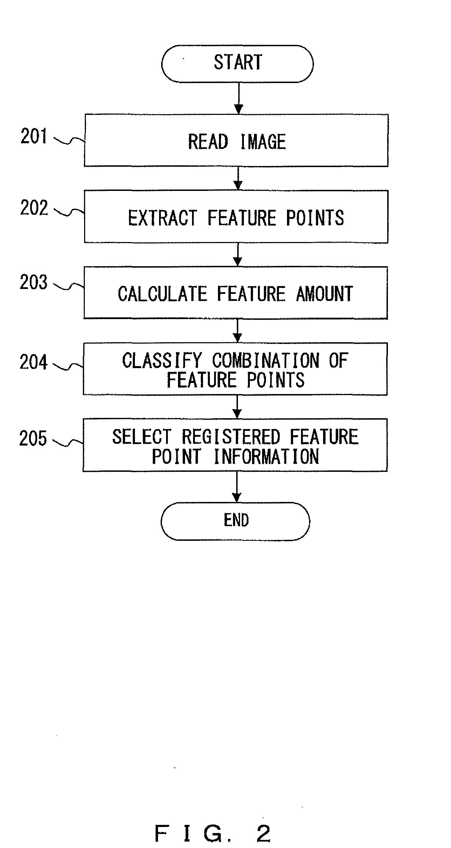

FIG. 2 is a flowchart illustrating an example of biometric authentication processing performed by the biometric authentication device 101 of FIG. 1. First, the image reading unit 111 reads an image of a pattern of a living body (step 201). The feature point extraction unit 112 extracts a plurality of feature points from the pattern (step 202), and the feature amount calculation unit 113 calculates a feature amount of each combination of the feature points (step 203). The classification unit 114 classifies the combination according to the feature amount (step 204), and the selection unit 115 selects registered feature point information to be compared with the feature points included in the combination in accordance with classification (step 205).

The biometric authentication device 101 above can compare biometric information to be authenticated in biometric authentication with registered biometric information in a short time.

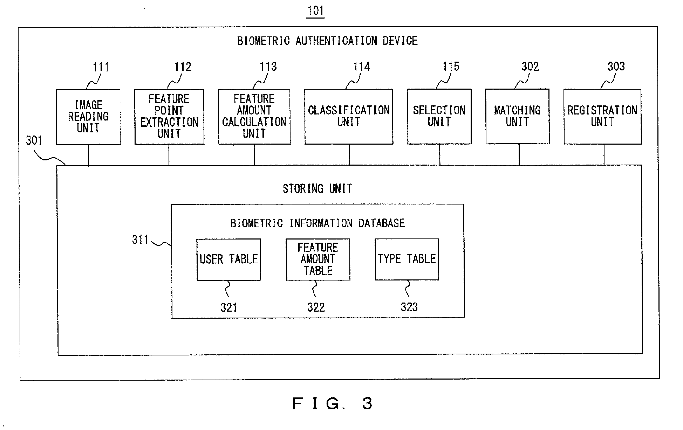

FIG. 3 illustrates a specific example of the biometric authentication device 101 of FIG. 1. The biometric authentication device 101 illustrated in FIG. 3 includes an image reading unit 111, a feature point extraction unit 112, a feature amount calculation unit 113, a classification unit 114, a selection unit 115, a storing unit 301, a matching unit 302, and a registration unit 303.

The storing unit 301 stores a biometric information database 311 that includes a user table 321, a feature amount table 322, and a type table 323. Information relating to a user is registered in the user table 321, a vectorized feature amount of the registered user is registered in the feature amount table 322, and information indicating the type of biometric information is registered in the type table 323.

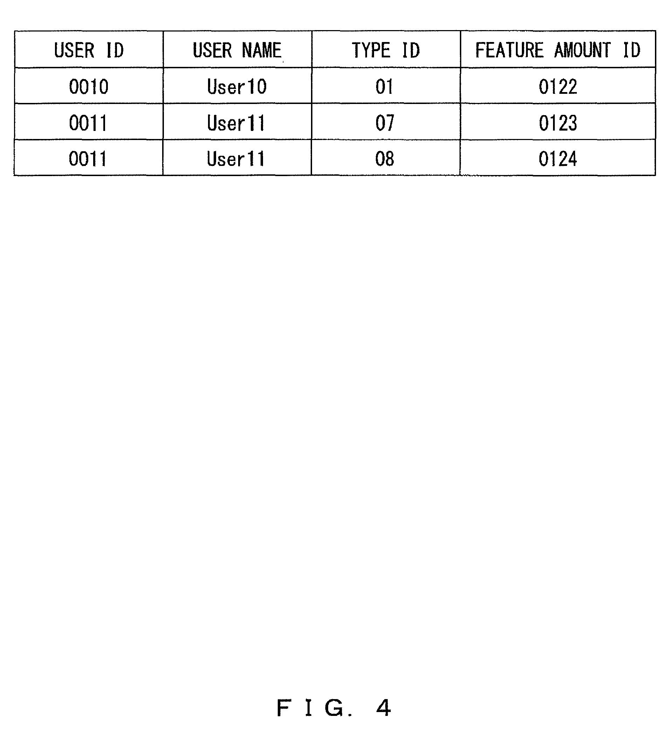

FIG. 4 illustrates an example of the user table 321. Each entry in the user table 321 of FIG. 4 includes a user ID, a user name, a type ID, and a feature amount ID. The user ID is identification information of a user, and the user name indicates the name of a user. The type ID is identification information of the type of biometric information, and the feature amount ID is identification information to refer to the feature amount table 322. The user ID and the type ID are used as primary keys, and the feature amount ID is used as a foreign reference key.

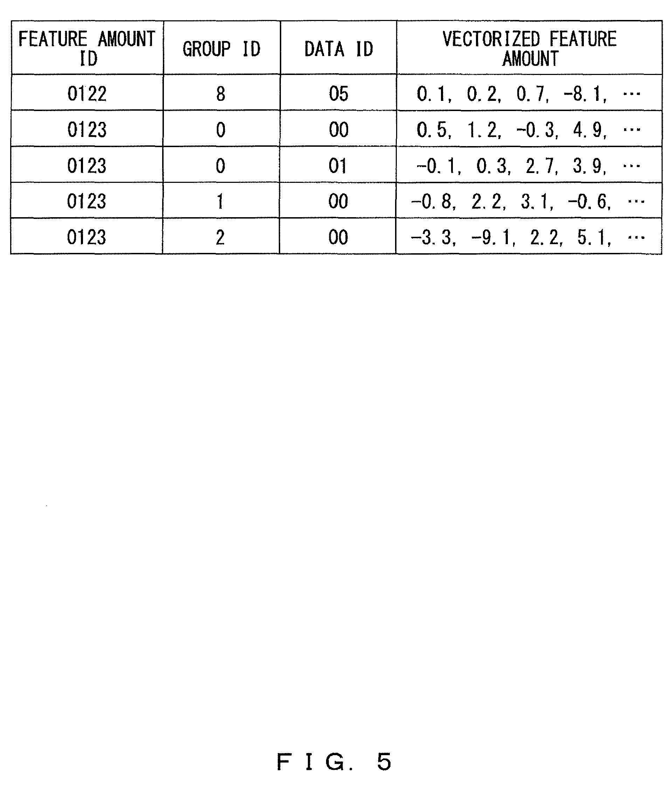

FIG. 5 illustrates an example of the feature amount table 322. Each entry in the feature amount table 322 of FIG. 5 includes a feature amount ID, a group ID, a data ID, and a vectorized feature amount. The group ID is identification information of a group into which a relation representing a combination of two feature points is classified. The data ID is identification information to identify a plurality of relations that belong to one group.

The vectorized feature amount corresponds to the registered feature point information, and represents local feature amount of two feature points included in a relation. The vectorized feature amount may be, for example, a multidimensional vector having a real number as an element. The feature amount ID, the group ID, and the data ID are used as primary keys.

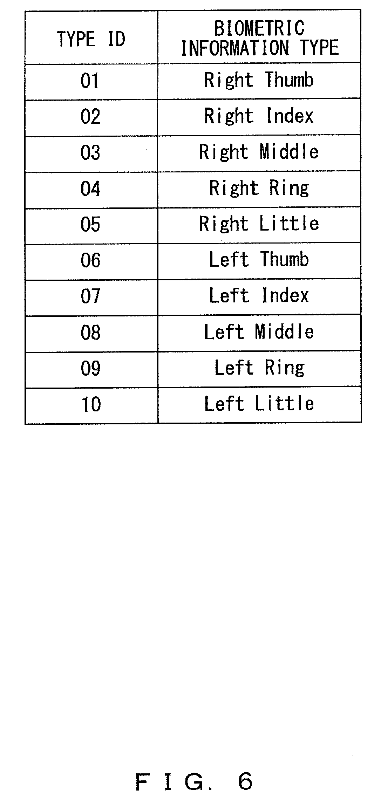

FIG. 6 illustrates an example of the type table 323. Each entry in the type table 323 of FIG. 6 includes a type ID and a biometric information type. The biometric information type indicates the type of biometric information. When a fingerprint image is used as biometric information, the types of a hand and a finger are used as the biometric information type. As an example, "Right Thumb" of the type "01" indicates the thumb of the right hand, and "Left Index" of the type "07" indicates the index finger of the left hand. The type ID is used as a primary key.

In biometric information registration processing, the image reading unit 111 reads an image of a pattern of a living body to be registered, and the feature point extraction unit 112 extracts a plurality of feature points to be registered from the pattern of the living body to be registered. The feature amount calculation unit 113 calculates a relation feature amount for each relation representing a combination of two feature points to be registered, and the classification unit 114 classifies the respective relations according to the relation feature amounts. The registration unit 303 registers vectorized feature amounts of the respective relations in the database 311 in accordance with the classification of the relations.

In biometric authentication processing, the image reading unit 111 reads an image of a pattern of a living body to be authenticated, and the feature point extraction unit 112 extracts a plurality of feature points to be authenticated from the pattern of the living body to be authenticated. The feature amount calculation unit 113 calculates a relation feature amount for each relation representing a combination of two feature points to be authenticated, and the classification unit 114 classifies the respective relations according to the relation feature amounts.

The selection unit 115 selects a vectorized feature amount to be compared with each of the relations from the biometric information database 311 in accordance with the classification of the relations. The matching unit 302 compares a vectorized feature amount of a relation to be authenticated with the selected vectorized feature amount, and authenticates the living body to be authenticated on the basis of a comparison result.

As an example, when a fingerprint image is used as biometric information, the image reading unit 111 is implemented by a non-contact fingerprint sensor such as an electrostatic-capacitance-type sensor, a thermosensitive sensor, an electric-field-type sensor, an optical sensor, or an ultrasonic sensor, and the image reading unit 111 obtains a fingerprint image from a finger of a user that is a person to be registered or a person to be authenticated. In this case, the feature point extraction unit 112 may extract, as a feature point, a ridge ending at which a ridge is broken, or a bifurcation at which a ridge branches, within the fingerprint image. The above ridge ending or bifurcation is referred to as a minutia. Biometric information registration processing and biometric authentication processing using a fingerprint image is principally described below.

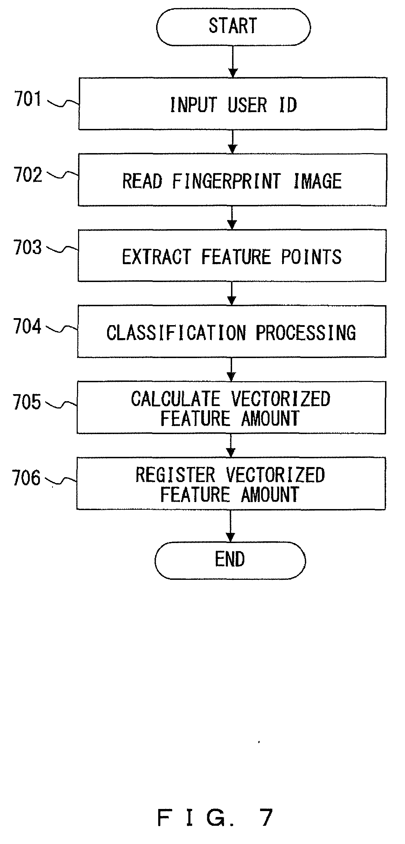

FIG. 7 is a flowchart illustrating an example of biometric information registration processing performed by the biometric authentication device 101 of FIG. 3. First, the registration unit 303 receives an input of a user ID and a user name of a person to be registered (step 701), and the image reading unit 111 reads a fingerprint image of the person to be registered, and stores the fingerprint image in the storing unit 301 (step 702). The registration unit 303 also receives an input of a biometric information type of a fingerprint.

Then, the feature point extraction unit 112 extracts a plurality of feature points to be registered from a pattern of the fingerprint image, and stores information relating to the feature points to be registered in the storing unit 301 (step 703). The feature amount calculation unit 113 and the classification unit 114 perform classification processing, and classify respective relations generated from the feature points to be registered (step 704). As a result of the classification processing, a group ID and a data ID are assigned to each relation.

The registration unit 303 calculates vectorized feature amounts of the respective relations (step 705), and registers, in the biometric information database 311, the vectorized feature amounts together with the user ID and the user name that have been input (step 706).

Here, the registration unit 303 registers the user ID and the user name in the user table 321, refers to the type table 323, and registers, in the user table 321, a type ID that corresponds to the biometric information type of a fingerprint. The registration unit 303 registers a feature amount ID in the user table 321 in association with the user ID, the user name, and the type ID.

The registration unit 303 registers a group ID, a data ID, and a vectorized feature amount for each of the relations in the feature amount table 322 in association with the feature amount ID registered in the user table 321.

In the feature amount table 322 of FIG. 5, group IDs, data IDs, and vectorized feature amounts for four relations have been registered in association with the feature amount ID "123". These vectorized feature amounts for the four relations indicate registered biometric information that correspond to a fingerprint image having the feature amount ID "123". In a group having the group ID "0", two relations that respectively have the data ID "00" and the data ID "01" are included, and in a group having the group ID "1" and a group having the group ID "2", one relation having the data ID "00" is included. A larger number of relations may be registered in association with one feature amount ID.

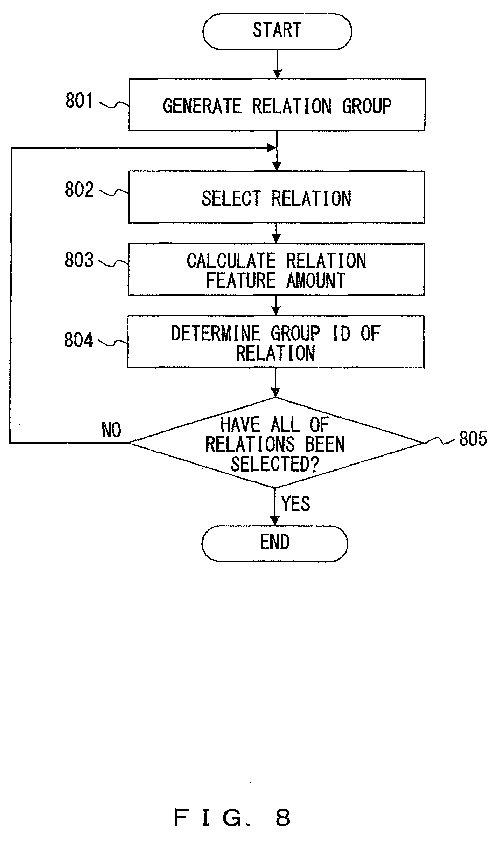

FIG. 8 is a flowchart illustrating an example of the classification processing of step 704 in FIG. 7. First, the classification unit 114 generates a relation group on the basis of feature points to be registered that have been extracted from a pattern of a fingerprint image, and stores information relating to each of the relations in the storing unit 301 (step 801). As an example, the classification unit 114 can extract, as a relation, a combination for which a distance between feature points is smaller than or equal to a prescribed value from among all of the combinations of two feature points included in a plurality of feature points to be registered. Accordingly, one feature point may be doubly included in a plurality of relations.

Then, the feature amount calculation unit 113 selects one relation from the relation group (step 802), and calculates a relation feature amount G of the selected relation (step 803). As the relation feature amount G, a function of a distance D between two feature points included in a relation and the number L of ridges included between the two feature points (a ridge count) can be used, for example. In this case, the feature amount calculation unit 113 may calculate the relation feature amount G according to the following function.

$$G = D/(L+1) \qquad (1)$$

$$D = \{(x2-x1)^2+(y2-y1)^2\}^{1/2} \qquad (2)$$

A relation feature amount G in expression (1) represents a ratio of a distance D to L+1. In expression (2), (x1, y1) represents coordinates of one feature point included in a relation, and (x2, y2) represents coordinates of the other feature point.

The classification unit 114 determines a group ID and a data ID of a relation on the basis of the relation feature amount G (step 804). As an example, the classification unit 114 may determine a group ID by using thresholds T1 to TK (K is an integer that is greater than or equal to 2) of the relation feature amount G, as described below.

$$0 \leq G < T1 \qquad \text{Group ID} = 0$$
$$T1 \leq G < T2 \qquad \text{Group ID} = 1$$
$$T2 \leq G < T3 \qquad \text{Group ID} = 2$$
$$\dots$$
$$T(K-1) \leq G < TK \qquad \text{Group ID} = K-1$$

In this case, a relation is classified into one of K groups. The thresholds T1 to TK can be determined in a simulation or the like in such a way that a uniform number of relations belong to each of the groups. Intervals between a threshold Tk and a threshold T(k+1) (k = 1 to K-1) may be equal, for example. The classification unit 114 can select a number in the ascending order from "00" for a group indicated by the determined group ID, and can use the selected number as a data ID.

The feature amount calculation unit 113 checks whether all of the relations in a relation group have been selected (step 805). When not all of the relations have been selected (step 805, NO), the feature amount calculation unit 113 repeats the process of step 802 and the processes that follow on the next relation. When all of the relations have been selected (step 805, YES), the feature amount calculation unit 113 terminates the processing.

In step 803, the feature amount calculation unit 113 may calculate the relation feature amount G by using a function that is not expression (1). As an example, a value obtained by multiplying the right-hand side of expression (1) by a prescribed coefficient may be used as the relation feature amount G, or the reciprocal (L+1)/D of the right-hand side of expression (1) may be used as the relation feature amount G. The relation feature amount G may be calculated by using a function of only one of the distance D and the ridge count L.

In the biometric information registration processing illustrated in FIG. 7, a relation group extracted from a pattern of a fingerprint image can be classified into a plurality of groups, and a vectorized feature amount for each of the groups can be registered in the biometric information database 311. Consequently, when the biometric authentication processing is performed, only a vectorized feature amount for a desired group can be selected, and the vectorized feature amount for the desired group can be compared with a vectorized feature amount to be authenticated.

As a biometric authentication method, a method referred to as one-to-one authentication and a method referred to as one-to-N authentication are known. One-to-one authentication is a method for performing the biometric authentication processing in a state in which registered biometric information to be compared is limited to biometric information of a single user by using, for example, a method in which a person to be authenticated operates an input device so as to input a user ID. One-to-N authentication is a method for performing the biometric authentication processing by using N pieces of registered biometric information as comparison targets without limiting registered biometric information to be compared.

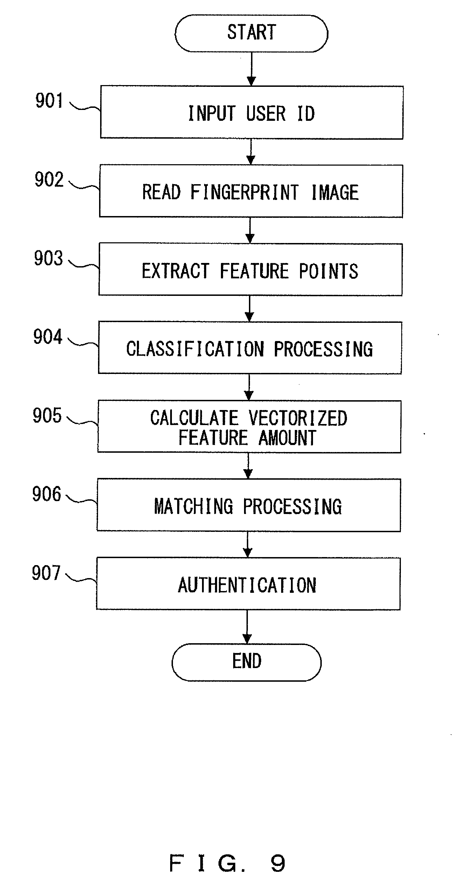

FIG. 9 is a flowchart illustrating an example of one-to-one biometric authentication processing performed by the biometric authentication device 101 illustrated in FIG. 3. The matching unit 302 first receives an input of a user ID of a person to be authenticated (step 901), and the image reading unit 111 reads a fingerprint image of the person to be authenticated, and stores the fingerprint image in the storing unit 301 (step 902). The matching unit 302 also receives an input of a biometric information type of a fingerprint.

Then, the feature point extraction unit 112 extracts a plurality of feature points to be authenticated from a pattern of the fingerprint image, and stores information relating to the feature points to be authenticated in the storing unit 301 (step 903). The feature amount calculation unit 113 and the classification unit 114 perform classification processing that is similar to the processing of FIG. 8 so as to classify respective relations that have been generated on the basis of the feature points to be authenticated (step 904). As a result of the classification processing, a group ID is assigned to each of the relations.

Then, the matching unit 302 calculates a vectorized feature amount of each of the relations (step 905), and performs matching processing so as to calculate a statistic of scores of a relation group (step 906). The matching unit 302 determines whether a person to be authenticated will be authenticated on the basis of the statistic of the scores (step 907). As an example, when scores based on a distance between vectors are used, the matching unit 302 determines that a person to be authenticated will be authenticated when the statistic of scores is smaller than an authentication threshold, and the matching unit 302 determines that a person to be authenticated will not be authenticated when a statistic of scores is greater than or equal to an authentication threshold.

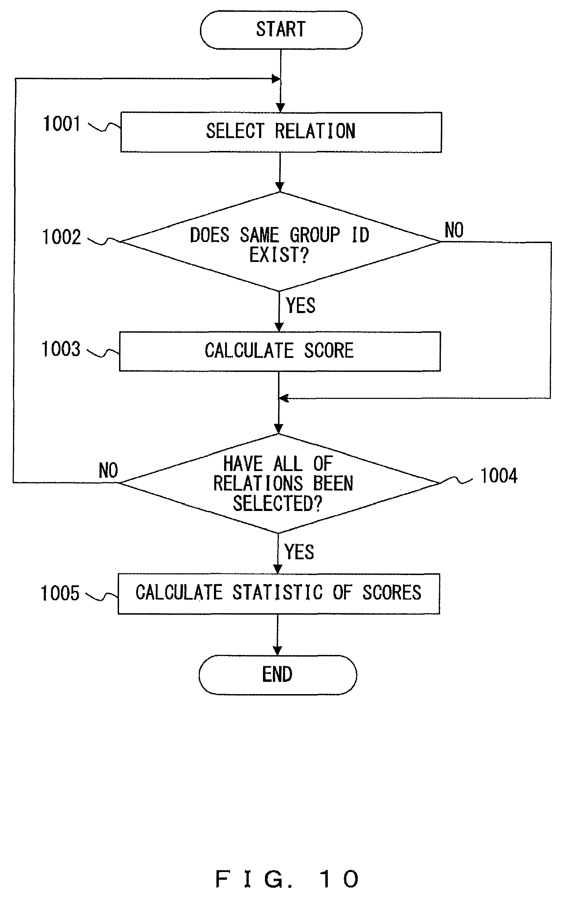

FIG. 10 is a flowchart illustrating an example of the matching processing of step 906 in FIG. 9. The matching unit 302 first selects one relation from a relation group (step 1001), and checks whether a group ID of the selected relation has been registered in the biometric information database 311 (step 1002).

At this time, the matching unit 302 refers to the type table 323 so as to obtain an type ID that corresponds to an input biometric information type, and the matching unit 302 refers to the user table 321 so as to obtain a feature amount ID that corresponds to an input user ID and the type ID. The matching unit 302 refers to the feature amount table 322 so as to check whether a group ID that matches a group ID of the selected relation exists among group IDs that correspond to the feature amount ID.

When a group ID that matches a group ID of the selected relation exists (step 1002, YES), the matching unit 302 calculates a score for a vectorized feature amount of the selected relation (step 1003).

At this time, the matching unit 302 compares the vectorized feature amount of the selected relation with one or more vectorized feature amounts that correspond to the same group ID in the feature amount table 322 so as to calculate a score of the selected relation. This score indicates a distance between vectors, and as the distance increases, the score has a larger value. When there are a plurality of vectorized feature amounts that correspond to the same group ID, the matching unit 302 can adopt a minimum value of scores for the vectorized feature amounts as a score of the selected relation.

The matching unit 302 checks whether all of the relations in a relation group have been selected (step 1004). When not all of the relations have been selected (step 1004, NO), the matching unit 302 repeats the process of step 1001 and the processes that follow on the next relation. When a group ID that matches a group ID of the selected relation does not exist (step 1002, NO), the matching unit 302 performs the process of step 1004 and the processes that follow.

When all of the relations have been selected (step 1004, YES), the matching unit 302 calculates a statistic of the calculated scores of relations (step 1005). As a statistic of scores, the sum, a mean value, a median, a maximum value, a minimum value, or the like can be used.

In step 1002, when a group ID that matches a group ID of the selected relation does not exist, it is highly likely that a relation included in a fingerprint image of a person to be authenticated is not similar to a registered relation. In this case, it is preferable that a statistic of scores be set to be greater such that a ratio at which a person to be authenticated will be authenticated is reduced. Accordingly, the matching unit 302 sets a score of a relation for which a group ID does not match any group IDs of registered relations, for example, to a value that is greater than any score calculated in step 1003, and calculates a statistic of scores.

In the biometric authentication processing of FIG. 9, vectorized feature amounts included in registered biometric information to be compared can be narrowed by using group IDs of respective relations included in biometric information to be authenticated. Consequently, the number of vectorized feature amounts to be compared is reduced, and matching processing can be performed at a high speed.

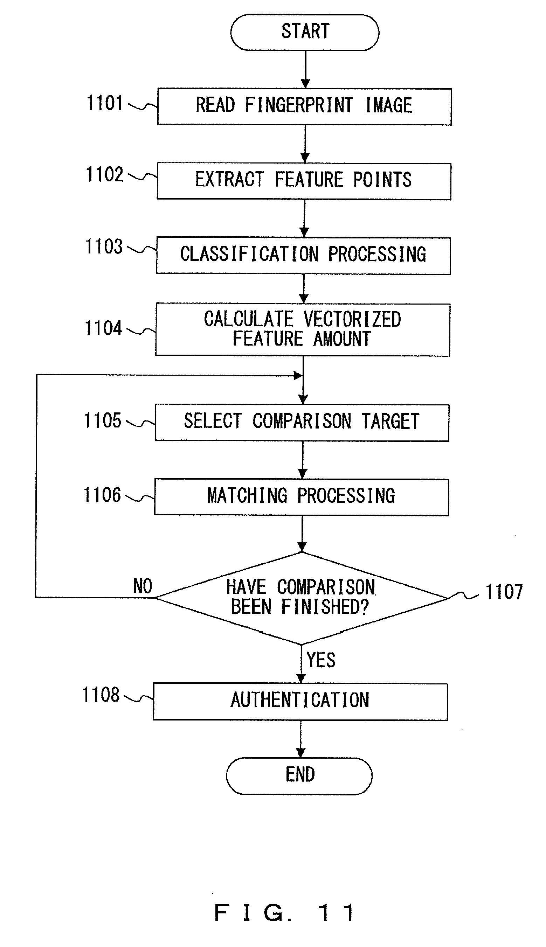

FIG. 11 is a flowchart illustrating an example of one-to-N biometric authentication processing performed by the biometric authentication device 101 of FIG. 3. The processes of steps 1101 to 1104 in FIG. 11 are similar to the processes of steps 902 to 905 in FIG. 9.

The matching unit 302 selects one piece of registered biometric information to be compared from the biometric information database 311 (step 1105), and performs matching processing similar to the processing illustrated in FIG. 10 by using the selected registered biometric information (step 1106). At this time, the matching unit 302 selects one feature amount ID from the user table 321, refers to the feature amount table 322, and selects a vectorized feature amount that corresponds to the selected feature amount ID as registered biometric information to be compared.

The matching unit 302 then checks whether all of the comparison targets have been selected (step 1107). When not all of the comparison targets have been selected (step 1107, NO), the matching unit 302 repeats the process of step 1105 and the processes that follow on the next comparison target.

When all of the comparison targets have been selected (step 1107, YES), the matching unit 302 determines whether a person to be authenticated will be authenticated on the basis of a statistic of scores for all of the comparison targets (step 1108). As an example, the matching unit 302 can determine that a person to be authenticated will be authenticated when one statistic of the statistics for all of the comparison targets is smaller than an authentication threshold, and the matching unit 302 can determine that a person to be authenticated will not be authenticated when all of the statistics are greater than or equal to an authentication threshold.

In the biometric authentication processing illustrated in FIG. 11, the matching processing can be performed at a high speed, similarly to the biometric authentication processing illustrated in FIG. 9.

As an international standard format of fingerprint information, International Organization for Standardization/International Electrotechnical Commission 19794-2 (ISO/IEC 19794-2) is known. As another international standard format of fingerprint information, American National Standards Institute International Committee for Information Technology Standards 381 (ANSI INCITS 381) and the like are also known.

In biometric information databases generated according to these international standard formats, biometric information such as a feature point or a singular point that has been extracted from a fingerprint image of a user has been registered. By using the existing registered biometric information above as a template, biometric information registration processing can be performed on the basis of feature points that have been extracted in advance according to a known fingerprint authentication algorithm, without directly inputting a fingerprint image. Consequently, a vectorized feature amount of a relation can be registered in the biometric information database 311 without reading again a fingerprint image of each of the users.

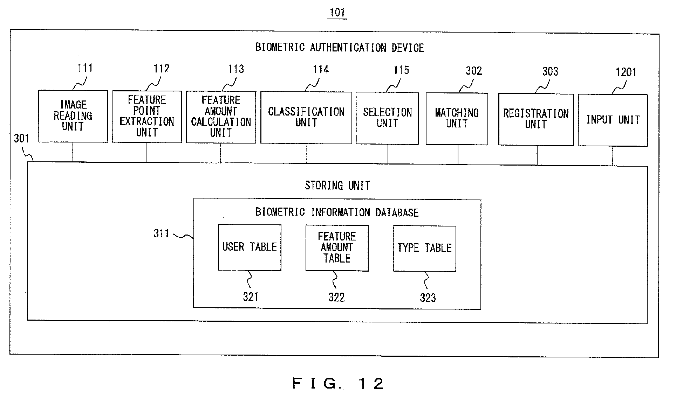

FIG. 12 illustrates a specific example of a biometric authentication device 101 using a template. The biometric authentication device 101 illustrated in FIG. 12 is configured to include an input unit 1201 in addition to the components in the biometric authentication device 101 illustrated in FIG. 3.

In the biometric information registration processing, the input unit 1201 receives a template that has been generated in advance from an external device. The feature amount calculation unit 113 calculates a relation feature amount for each of the relations on the basis of feature points registered in the template, and the classification unit 114 classifies the respective relations on the basis of the relation feature amounts. The registration unit 303 registers vectorized feature amounts of the respective relations in the biometric information database 311 on the basis of the classification of the relations.

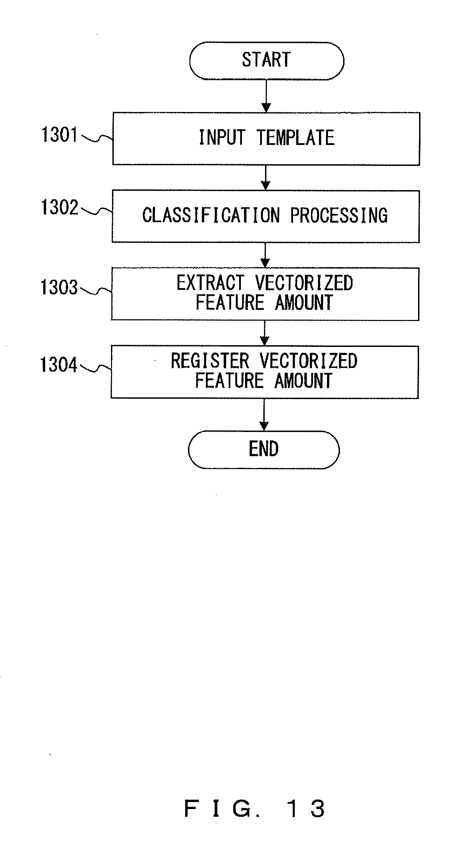

FIG. 13 is a flowchart illustrating an example of the biometric information registration processing performed by the biometric authentication device 101 illustrated in FIG. 12. The input unit 1201 first receives a template from an external device, and stores the received template in the storing unit 301 (step 1301). Then, the feature amount calculation unit 113 and the classification unit 114 perform classification processing so as to classify respective relations that have been generated on the basis of feature points registered in the template (step 1302). As a result of the classification processing, a group ID and a data ID are assigned to each of the relations.

The registration unit 303 calculates a vectorized feature amount of each of the relations (step 1303), and registers the vectorized feature amount, together with a user ID and a user name registered in the template, in the biometric information database 311 (step 1304).

The classification processing of step 1302 is similar to the classification processing illustrated in FIG. 8. However, a ridge count L in expression (1) is an optional item in the international standard format, and the ridge count L is not always included in a template.

When a ridge count L is not included in a template, the feature amount calculation unit 113 estimates the ridge count L on the basis of angle information and singular point information relating to a relation. The angle information represents an angle between a line segment connecting two feature points included in a relation and a ridge direction at each of the feature points. The singular point information represents a distance between a line segment connecting two feature points included in a relation and a singular point registered in a template. As the singular point, an upper core in a fingerprint image can be used, for example.

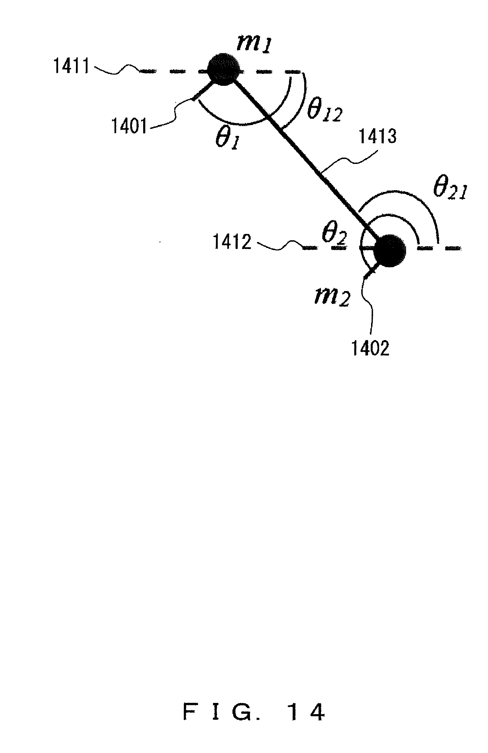

FIG. 14 illustrates an example of an angle between a line segment connecting feature points and a ridge direction. An angle θ1 represents an angle of a ridge direction 1401 at one feature point m1 included in a relation with respect to a reference line 1411 in a horizontal direction. An angle θ2 represents an angle of a ridge direction 1402 at the other feature point m2 included in the relation with respect to a reference line 1412 in the horizontal direction.

An angle θ12 is an angle of a vector from the feature point m1 to the feature point m2, and represents an angle of a line segment 1413 connecting the feature point m1 and the feature point m2 with respect to the reference line 1411. An angle θ21 is an angle of a vector from the feature point m2 to the feature point m1, and represents an angle of a line segment 1413 with respect to the reference line 1412.

In this case, θ1-θ12 represents an angle between the line segment 1413 and the ridge direction 1401 at the feature point m1, and θ2-θ21 represents an angle between the line segment 1413 and the ridge direction 1401 at the feature point m2.

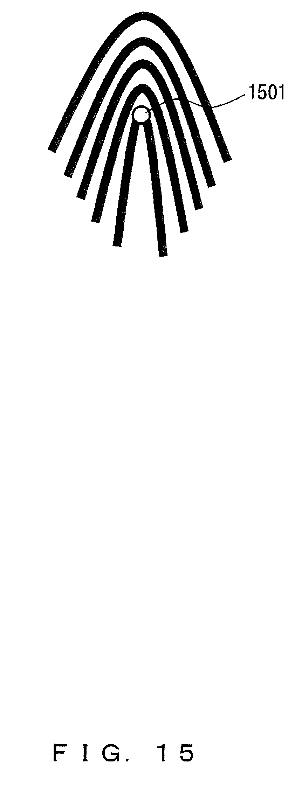

FIG. 15 illustrates an example of an upper core in a fingerprint image. An upper core 1501 indicates a point at which a change in the ridge direction is greatest within an area in which ridges are upwardly convex in a fingerprint image.

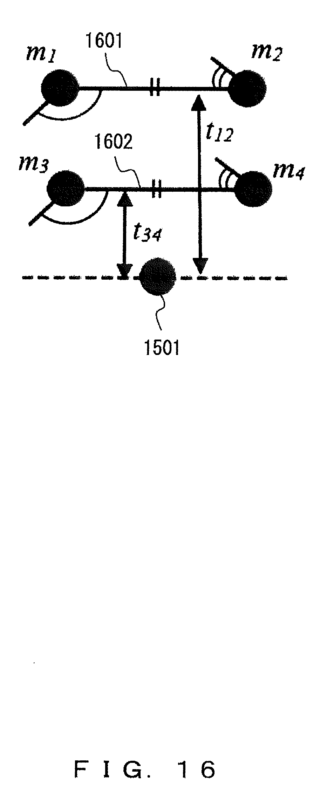

FIG. 16 illustrates an example of a distance between a line segment connecting feature points and an upper core. A distance t12 represents a distance between a line segment 1601 connecting a feature point m1 and a feature point m2 and an upper core 1501, and the distance t12 corresponds to the length of a perpendicular from the upper core 1501 to the line segment 1601. A distance t34 represents a distance between a line segment 1602 connecting a feature point m3 and a feature point m4 and the upper core 1501, and the distance t34 corresponds to the length of a perpendicular from the upper core 1501 to the line segment 1602.

The feature amount calculation unit 113 can estimate a ridge count L of a relation formed by the feature point m1 and the feature point m2 by using the angle information and the singular point information described above according to the following function.

following function.

$$L = \alpha \cdot \sin(\theta1-\theta12) \cdot \sin(\theta2-\theta21) + \beta/(t12+1) \qquad (3)$$

In expression (3), α and β are weighting coefficients, and can be determined in simulation or the like. A ridge count L of a relation formed by the feature point m3 and the feature point m4 can also be estimated according to a similar expression. Expression (3) is configured according to the two characteristics below relating to a fingerprint.

Characteristic 1: As an angle between a line segment connecting feature points and a ridge direction becomes closer to n/2, a ridge count L increases.

A ridge direction at a feature point is calculated according to a direction of a ridge around the feature point. Accordingly, when a direction of a line segment connecting feature points is orthogonal to ridge directions at the feature points, the number of ridges that pass between the feature points increases. When a direction of a line segment connecting feature points becomes more parallel to ridge directions at the feature points, the number of ridges that pass between the feature points decreases.

Characteristic 2: As a line segment connecting feature points becomes closer to a singular point, a ridge count L increases.

In a fingerprint image, a change in the ridge direction becomes greater within an area closer to a singular point, such as an upper core, and therefore the number of returning ridges increases.

t12 in expression (3) may be obtained by using a lower core instead of the upper core. The lower core indicates a point at which a change in the ridge direction is greatest within an area in which ridges are downwardly convex. When the singular point information does not need to be used, the following expression may be used instead of expression (3).

expression may be used instead of expression (3).

$$L = \alpha \cdot \sin(\theta1-\theta12) \cdot \sin(\theta2-\theta21) \qquad (4)$$

By estimating a ridge count L, as described above, even when the ridge count L is not included in a template, a relation feature amount G can be calculated according to expression (1).

The feature amount calculation unit 113 may estimate a ridge count L by using a function that is neither expression (3) nor expression (4). In this case, it is preferable that a function expressing at least either characteristic 1 or characteristic 2 be used.

The configurations illustrated in FIGS. 1, 3, and 12 of the biometric authentication device 101 are examples, and some components may be omitted or changed according to the purposes or conditions of the biometric authentication device 101. As an example, when the biometric authentication device 101 illustrated in FIG. 3 does not perform the biometric information registration processing, the registration unit 303 can be omitted. When the type of biometric information used to perform biometric authentication has been determined in advance, the type table 323 illustrated in FIG. 3 or 12 can be omitted.

The flowcharts illustrated in FIGS. 2, 7 to 11, and 13 are examples, and some processes may be omitted or changed according to the configuration or conditions of the biometric authentication device 101. As an example, in step 801 of FIG. 8, the classification unit 114 may extract all of the combinations of two feature points as relations. In step 1003 of FIG. 10, the matching unit 302 may calculate a score indicating a degree of similarity between vectors, instead of a score indicating a distance between vectors. In step 1301 of FIG. 13, the input unit 1201 may input a template generated according to a format that is not ISO/IEC 19794-2 or ANSI INCITS 381.

In step 704 of FIG. 7, step 904 of FIG. 9, or step 1103 of FIG. 11, the feature amount calculation unit 113 may estimate a ridge count L, similarly to in step 1302 of FIG. 13. In this case, the feature amount calculation unit 113 calculates a relation feature amount G by using the estimated ridge count L.

In the biometric authentication processing and the biometric information registration processing, biometric information other than a fingerprint image, such as a palm print image, a vein image of a hand or another body part, or a muzzle pattern image, may be used. The muzzle pattern image is valid when a target to be authenticated is an animal such as cattle.

The tables illustrated in FIGS. 4 to 6 are examples, and information in the tables may be omitted or changed according to the configuration or conditions of the biometric authentication device 101. As an example, in the user table 321 illustrated in FIG. 4, when a user name does not need to be registered, the user name can be omitted, and when the type of biometric information used to perform biometric authentication has been determined in advance, a type ID can be omitted.

In the feature amount table 322 illustrated in FIG. 5, another feature amount indicating a feature of a pattern of a living body may be registered instead of a vectorized feature amount. When biometric information such as a palm print image, a vein image, or a muzzle pattern image is used, the number of biometric information types and the content of each of the biometric information types are changed in the type table 323 illustrated in FIG. 6.

The feature points illustrated in FIGS. 14 and 16 and the upper cores illustrated in FIGS. 15 and 16 are examples, and another feature point or singular point may be used.

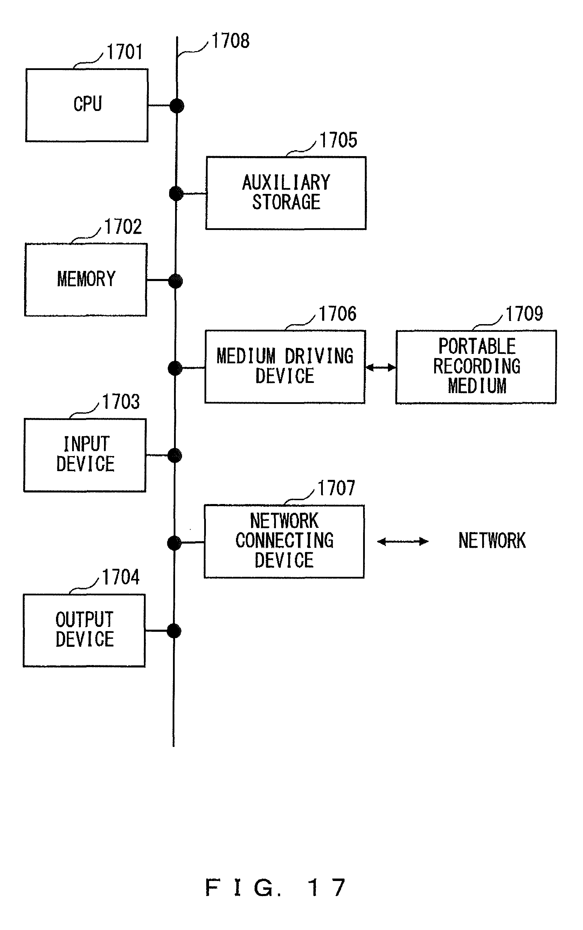

The biometric authentication devices 101 illustrated in FIGS. 1, 3, and 12 can be implemented by using, for example, an information processing device (a computer) illustrated in FIG. 17.

The information processing device illustrated in FIG. 17 includes a Central Processing Unit (CPU) 1701, a memory 1702, an input device 1703, an output device 1704, an auxiliary storage 1705, a medium driving device 1706, and a network connecting device 1707. These components are connected to each other via a bus 1708. The image reading unit 111 illustrated in FIGS. 1, 3, or 12 may be connected to the bus 1708.

The memory 1702 is a semiconductor memory such as a Read Only Memory (ROM), a Random Access Memory (RAM), or a flash memory. The memory 1702 stores a program and data used to perform the biometric information registration processing or the biometric authentication processing. The memory 1702 can be used as the storing unit 301 illustrated in FIG. 3 or 12.

The CPU 1701 (a processor) operates as the feature point extraction unit 112, the feature amount calculation unit 113, the classification unit 114, and the selection unit 115 that are illustrated in FIG. 1, 3, or 12, for example, by executing a program by using the memory 1702. The CPU 1701 also operates as the matching unit 302 and the registration unit 303 that are illustrated in FIG. 3 or 12.

In this case, in step 201 of FIG. 2, the CPU 1701 executes a program so as to cause the image reading unit 111 to read an image of a pattern of a living body. In step 702 of FIG. 7, step 902 of FIG. 9, and step 1101 of FIG. 11, the CPU 1701 executes a program so as to cause the image reading unit 111 to read a fingerprint image.

The input device 1703 is, for example, a keyboard, a pointing device, or the like. The input device 1703 is used to input instructions or information from an operator or a user. The output device 1704 is, for example a display device, a printer, a speaker, or the like. The output device 1704 is used to output inquiries or processing results to an operator or a user. The processing result of the biometric authentication processing may be a result of authenticating a target to be authenticated.

The auxiliary storage 1705 is, for example, a magnetic disk device, an optical disk device, a magneto-optical disk device, a tape device, or the like. The auxiliary storage 1705 may be a hard disk drive. The information processing device can store a program and data in the auxiliary storage 1705, and can use the program and data by loading them onto the memory 1702. The auxiliary storage 1705 can be used as the storing unit 301 illustrated in FIG. 3 or 12.

The medium driving device 1706 drives a portable recording medium 1709, and accesses the content recorded in the portable recording medium 1709. The portable recording medium 1709 is a memory device, a flexible disk, an optical disk, a magneto-optical disk, or the like. The portable recording medium 1709 may be a Compact Disk Read Only Memory (CD-ROM), a Digital Versatile Disk (DVD), a Universal Serial Bus (USB) memory, or the like. An operator can store a program and data in the portable recording medium 1709, and can use the program and the data by loading them onto the memory 1702.

As described above, a computer-readable recording medium that stores a program and data used to perform the biometric information registration processing or the biometric authentication processing is a physical (non-transitory) recording medium such as the memory 1702, the auxiliary storage 1705, or the portable recording medium 1709.

The network connecting device 1707 is a communication interface that is connected to a communication network such as a Local Area Network or a Wide Area Network, and that performs data conversion associated with communication. The network connecting device 1707 can be used as the input unit 1201 of FIG. 12. The information processing device can receive a program and data from an external device via the network connecting device 1707, and can use the program and the data by loading them onto the memory 1702.

The information processing device can receive a processing request from a user terminal via the network connecting device 1707, can perform the biometric information registration processing or the biometric authentication processing, and can transmit a processing result to the user terminal.

The information processing device does not need to include all of the components illustrated in FIG. 17, and some components can be omitted according to purposes or conditions. As an example, when instructions or information do not need to be input from an operator or a user, the input device 1703 may be omitted. When inquiries or processing results do not need to be output to an operator or a user, the output device 1704 may be omitted.

When communication with other devices does not need to be performed, the network connecting device 1707 may be omitted, and when the portable recording medium 1709 is not used, the medium driving device 1706 may be omitted.

**Claims**

1. A biometric authentication device comprising:

    an image reading unit (111) configured to read an image of a pattern of a living body;
    a feature point extraction unit (112) configured to extract a plurality of feature points from the pattern;
    a feature amount calculation unit (113) configured to calculate a feature amount of each combination of feature points;
    a classification unit (114) configured to classify the combination according to the feature amount; and
    a selection unit (115) configured to select registered feature point information to be compared with the feature points included in the combination in accordance with classification.

2. The biometric authentication device according to claim 1, wherein
    the feature amount calculation unit is configured to calculate the feature amount according to a distance between the feature points and the number of ridges included between the feature points.

3. The biometric authentication device according to claim 2, wherein
    the feature amount calculation unit is configured to estimate the number of ridges included between the feature points on the basis of an angle between a line segment (1413) connecting the feature points and a ridge direction (1401, 1402) at each of the feature points.

4. The biometric authentication device according to claim 2, wherein
    the feature amount calculation unit is configured to estimate the number of ridges included between the feature points on the basis of an angle between a line segment (1413, 1601, 1602) connecting the feature points and a ridge direction (1401, 1402) at each of the feature points, and a distance between a singular point (1501) included in the pattern and the line segment.

5. The biometric authentication device according to any of claims 1 to 4, further comprising
    a registration unit (303) configured to register the registered feature point information in a database (311),
    wherein the image reading unit is configured to read an image of a pattern of a living body to be registered, the feature point extraction unit is configured to extract a plurality of feature points to be registered from the pattern of the living body to be registered, the feature amount calculation unit is configured to calculate a feature amount of each combination of the feature points to be registered, the classification unit is configured to classify the combination of the feature points to be registered according to the feature amount of the combination of the feature points to be registered, and the registration unit is configured to register, in a database, information relating to the feature points to be registered included in the combination of the feature points to be registered as the registered feature point information in accordance with classification of the combination of the feature points to be registered.

6. The biometric authentication device according to any of claims 1 to 4, further comprising:

an input unit (1201) configured to receive information relating to a feature point to be registered; and
a registration unit (303) configured to register the registered feature point information in a database (311),

wherein the feature amount calculation unit is configured to calculate a feature amount of each combination of feature points to be registered, the classification unit is configured to classify the combination of the feature points to be registered according to the feature amount of the combination of the feature points to be registered, and the registration unit is configured to register, in a database, the information relating to the feature points to be registered included in the combination of the feature points to be registered as the registered feature point information in accordance with classification of the combination of the feature points to be registered.

7. The biometric authentication device according to claim 5 or 6, wherein
the feature amount calculation unit is configured to calculate the feature amount of the combination of the feature points to be registered in accordance with a distance between the feature points to be registered and the number of ridges included between the feature points to be registered.

8. The biometric authentication device according to claim 7, wherein
the feature amount calculation unit is configured to estimate the number of ridges included between the feature points to be registered on the basis of an angle between a line segment (1413) connecting the feature points to be registered and a ridge direction (1401, 1402) at each of the feature points to be registered.

9. The biometric authentication device according to claim 7, wherein
the feature amount calculation unit is configured to estimate the number of ridges included between the feature points to be registered on the basis of an angle between a line segment (1413, 1601, 1602) connecting the feature points to be registered and a ridge direction (1401, 1402) at each of the feature points to be registered, and a distance between a singular point (1501) included in the pattern and the line segment.

10. A biometric authentication method comprising:

reading (201) an image of a pattern of a living body;
extracting (202) a plurality of feature points from the pattern;
calculating (203) a feature amount of each combination of the feature points;
classifying (204) the combination according to the feature amount; and
selecting (205) registered feature point information to be compared with the feature points included in the combination in accordance with the classifying.

11. The biometric authentication method according to claim 10, wherein
the calculating the feature amount calculates the feature amount according to a distance between the feature points and the number of ridges included between the feature points.

12. The biometric authentication method according to claim 11, wherein
the calculating the feature amount estimates the number of ridges included between the feature points on the basis of an angle between a line segment (1413) connecting the feature points and a ridge direction (1401, 1402) at each of the feature points.

13. A biometric authentication program for causing a computer to execute a process comprising:

enabling (201) an image reading unit to read an image of a pattern of a living body;
extracting (202) a plurality of feature points from the pattern;
calculating (203) a feature amount of each combination of the feature points;
classifying (204) the combination according to the feature amount; and
selecting (205) registered feature point information to be compared with the feature points included in the combination in accordance with the classifying.

14. The biometric authentication program according to claim 13, wherein
the calculating the feature amount calculates the feature amount according to a distance between the feature points and the number of ridges included between the feature points.

15. The biometric authentication program according to claim 14, wherein
the calculating the feature amount estimates the number of ridges included between the feature points on the basis of an angle between a line segment (1413) connecting the feature points and a ridge direction (1401, 1402) at each of the feature points.

101

BIOMETRIC AUTHENTICATION DEVICE

111

IMAGE READING UNIT

112

FEATURE POINT EXTRACTION UNIT

113

FEATURE AMOUNT CALCULATION UNIT

114

CLASSIFICATION UNIT

115

SELECTION UNIT

F I G. 1

START

201 — READ IMAGE

202 — EXTRACT FEATURE POINTS

203 — CALCULATE FEATURE AMOUNT

204 — CLASSIFY COMBINATION OF FEATURE POINTS

205 — SELECT REGISTERED FEATURE POINT INFORMATION

END

F I G. 2

<u>101</u>

BIOMETRIC AUTHENTICATION DEVICE

| 111 | 112 | 113 | 114 | 115 | 302 | 303 |
|---|---|---|---|---|---|---|
| IMAGE READING UNIT | FEATURE POINT EXTRACTION UNIT | FEATURE AMOUNT CALCULATION UNIT | CLASSIFICATION UNIT | SELECTION UNIT | MATCHING UNIT | REGISTRATION UNIT |

301

STORING UNIT

BIOMETRIC INFORMATION DATABASE

311

| USER TABLE | FEATURE AMOUNT TABLE | TYPE TABLE |
|---|---|---|
| 321 | 322 | 323 |

F I G. 3

| USER ID | USER NAME | TYPE ID | FEATURE AMOUNT ID |
|---------|-----------|---------|-------------------|
| 0010 | User10 | 01 | 0122 |
| 0011 | User11 | 07 | 0123 |
| 0011 | User11 | 08 | 0124 |

F I G. 4

| FEATURE AMOUNT ID | GROUP ID | DATA ID | VECTORIZED FEATURE AMOUNT |
|---|---|---|---|
| 0122 | 8 | 05 | 0.1, 0.2, 0.7, −8.1, ⋯ |
| 0123 | 0 | 00 | 0.5, 1.2, −0.3, 4.9, ⋯ |
| 0123 | 0 | 01 | −0.1, 0.3, 2.7, 3.9, ⋯ |
| 0123 | 1 | 00 | −0.8, 2.2, 3.1, −0.6, ⋯ |
| 0123 | 2 | 00 | −3.3, −9.1, 2.2, 5.1, ⋯ |

F I G. 5

| TYPE ID | BIOMETRIC INFORMATION TYPE |
|---------|----------------------------|
| 01 | Right Thumb |
| 02 | Right Index |
| 03 | Right Middle |
| 04 | Right Ring |
| 05 | Right Little |
| 06 | Left Thumb |
| 07 | Left Index |
| 08 | Left Middle |
| 09 | Left Ring |
| 10 | Left Little |

F I G. 6

START

701 INPUT USER ID

702 READ FINGERPRINT IMAGE

703 EXTRACT FEATURE POINTS

704 CLASSIFICATION PROCESSING

705 CALCULATE VECTORIZED
FEATURE AMOUNT

706 REGISTER VECTORIZED
FEATURE AMOUNT

END

F I G. 7

START

801 — GENERATE RELATION GROUP

802 — SELECT RELATION

803 — CALCULATE RELATION FEATURE AMOUNT

804 — DETERMINE GROUP ID OF RELATION

HAVE ALL OF RELATIONS BEEN SELECTED? — 805

NO

YES

END

F I G. 8

```
          ┌─────────────┐
          │    START    │
          └─────────────┘
                 │
                 ▼
901   ┌──────────────────────────┐
      │      INPUT USER ID        │
      └──────────────────────────┘
                 │
                 ▼
902   ┌──────────────────────────┐
      │   READ FINGERPRINT IMAGE  │
      └──────────────────────────┘
                 │
                 ▼
903   ┌──────────────────────────┐
      │   EXTRACT FEATURE POINTS  │
      └──────────────────────────┘
                 │
                 ▼
904   ┌──────────────────────────┐
      │  CLASSIFICATION PROCESSING │
      └──────────────────────────┘
                 │
                 ▼
905   ┌──────────────────────────┐
      │     CALCULATE VECTORIZED  │
      │       FEATURE AMOUNT      │
      └──────────────────────────┘
                 │
                 ▼
906   ┌──────────────────────────┐
      │     MATCHING PROCESSING   │
      └──────────────────────────┘
                 │
                 ▼
907   ┌──────────────────────────┐
      │       AUTHENTICATION      │
      └──────────────────────────┘
                 │
                 ▼
          ┌─────────────┐
          │     END     │
          └─────────────┘
```

F I G. 9

START

1001 ── SELECT RELATION

1002 ── DOES SAME GROUP ID EXIST? ──NO──┐

YES

1003 ── CALCULATE SCORE

1004 ── HAVE ALL OF RELATIONS BEEN SELECTED? ──NO──┐

YES

1005 ── CALCULATE STATISTIC OF SCORES

END

F I G. 1 0

```
                        ┌──────────────┐
                        │    START     │
                        └──────────────┘
                               │
                               ▼
    1101 ～┐   ┌─────────────────────────────────┐
           │   │   READ FINGERPRINT IMAGE        │
               └─────────────────────────────────┘
                               │
                               ▼
    1102 ～┐   ┌─────────────────────────────────┐
           │   │    EXTRACT FEATURE POINTS       │
               └─────────────────────────────────┘
                               │
                               ▼
    1103 ～┐   ┌─────────────────────────────────┐
           │   │    CLASSIFICATION PROCESSING    │
               └─────────────────────────────────┘
                               │
                               ▼
    1104 ～┐   ┌─────────────────────────────────┐
           │   │      CALCULATE VECTORIZED       │
           │   │        FEATURE AMOUNT           │
               └─────────────────────────────────┘
                               │
              ┌────────────────┤
              │                ▼
    1105 ～┐  │ ┌─────────────────────────────────┐
           │  │ │    SELECT COMPARISON TARGET     │
              │ └─────────────────────────────────┘
              │                │
              │                ▼
    1106 ～┐  │ ┌─────────────────────────────────┐
           │  │ │      MATCHING PROCESSING        │
              │ └─────────────────────────────────┘
              │                │
              │                ▼
              │           ╱─────────────╲
         NO   │          ╱ HAVE COMPARISON╲      1107
              └─────────╱  BEEN FINISHED?  ╲～
                        ╲                  ╱
                         ╲────────────────╱
                               │ YES
                               ▼
    1108 ～┐   ┌─────────────────────────────────┐
           │   │        AUTHENTICATION           │
               └─────────────────────────────────┘
                               │
                               ▼
                        ┌──────────────┐
                        │     END      │
                        └──────────────┘
```

F I G.  1 1

<u>101</u>

BIOMETRIC AUTHENTICATION DEVICE

| 111 | 112 | 113 | 114 | 115 | 302 | 303 | 1201 |
|---|---|---|---|---|---|---|---|
| IMAGE READING UNIT | FEATURE POINT EXTRACTION UNIT | FEATURE AMOUNT CALCULATION UNIT | CLASSIFICATION UNIT | SELECTION UNIT | MATCHING UNIT | REGISTRATION UNIT | INPUT UNIT |

301

STORING UNIT

BIOMETRIC INFORMATION DATABASE

311

| USER TABLE | FEATURE AMOUNT TABLE | TYPE TABLE |
|---|---|---|
| 321 | 322 | 323 |

F I G. 1 2

24

START

1301 — INPUT TEMPLATE

1302 — CLASSIFICATION PROCESSING

1303 — EXTRACT VECTORIZED
FEATURE AMOUNT

1304 — REGISTER VECTORIZED
FEATURE AMOUNT

END

F I G.　1 3

F I G. 1 4

1501

F I G.　1 5

F I G . 1 6

F I G. 1 7

Europäisches
Patentamt

European
Patent Office

Office européen
des brevets

# EUROPEAN SEARCH REPORT

Application Number

EP 16 18 6097

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/058325 A1 (UDUPA RAGHAVENDRA U [IN] ET AL) 17 March 2005 (2005-03-17) * abstract; figure 1 * *    28, 39, 58, 67, 71-73; claim 41 * | 1-15 | INV. G06K9/00 |
| X | GERMAIN R S ET AL: "Fingerprint matching using transformation parameter clustering", IEEE COMPUTATIONAL SCIENCE & ENGINEERING, IEEE COMPUTER SOCIETY, US, 1 October 1997 (1997-10-01), pages 42-49, XP002361694, ISSN: 1070-9924, DOI: 10.1109/99.641608 * Sections "Flash and geometric hashing" and "Data abstraction and index generation"; figure 1 * | 1-15 | |
| A | XUDONG JIANG ET AL: "Fingerprint minutiae matching based on the local and global structures", PROCEEDINGS / 15TH INTERNATIONAL CONFERENCE ON PATTERN RECOGNITION : BARCELONA, SPAIN, SEPTEMBER 3 - 7, 2000; [PROCEEDINGS OF THE INTERNATIONAL CONFERENCE ON PATTERN RECOGNITION. (ICPR)], IEEE COMPUTER SOCIETY, LOS ALAMITOS, CALIF. [U.A.], vol. 2, 3 September 2000 (2000-09-03), pages 1038-1041, XP010533991, DOI: 10.1109/ICPR.2000.906252 ISBN: 978-0-7695-0750-7 * Section 2; figure 1 * | 2-4,7-9, 11,12, 14,15 | TECHNICAL FIELDS SEARCHED (IPC) G06K |

The present search report has been drawn up for all claims

| Place of search | Date of completion of the search | Examiner |
|---|---|---|
| The Hague | 8 February 2017 | Grigorescu, Simona |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 16 18 6097

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2017

| Patent document cited in search report | Publication date | Patent family member(s) | Publication date |
|---|---|---|---|
| US 2005058325 A1 | 17-03-2005 | NONE | |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 10177650 A
- JP 2001511569 A
- JP 2007202912 A
- JP 2010526361 A
- JP 2004536384 A

### Non-patent literature cited in the description

- **R. CAPPELLI ; M. FERRARA ; D. MALTONI.** Minutia Cylinder-Code: A New Representation and Matching Technique for Fingerprint Recognition. *IEEE TRANSACTIONS ON PATTERN ANALYSIS AND MACHINE INTELLIGENCE,* 2010, vol. 32 (12), 2128-2141